# EUROPÄISCHE PATENTSCHRIFT

(11) **EP 1 562 709 B1**
(45) Veröffentlichungstag und Bekanntmachung des Hinweises auf die Patenterteilung: **04.10.2006**
(21) Anmeldenummer: 03811384.1
(22) Anmeldetag: 20.11.2003
(51) Int. Cl.: B01L 3/00, G01N 1/28, B01L 9/00

(54) **HALTER FÜR EINE AUFNAHMEVORRICHTUNG ZUM AUFNEHMEN VON BIOLOGISCHEN OBJEKTEN UND MIKROSKOPSYSTEM FÜR DEN BETRIEB MIT EINEM DERARTIGEN HALTER**
SAMPLE HOLDER FOR A RECEPTION DEVICE RECEIVING BIOLOGICAL OBJECTS AND MICROSCOPE SYSTEM DESIGNED TO OPERATE USING ONE SUCH SAMPLE HOLDER
PORTE-ECHANTILLONS POUR UN DISPOSITIF DE RECEPTION RECEVANT DES OBJETS BIOLOGIQUES ET SYSTEME DE MICROSCOPE FONCTIONNANT AVEC UN TEL PORTE-ECHANTILLONS

(30) Priorität: 20.11.2002 DE 10254229
(43) Veröffentlichungstag der Anmeldung: 17.08.2005
(73) Patentinhaber: P.A.L.M. Microlaser Technologies AG, 82347 Bernried (DE)
(72) Erfinder: SCHÜTZE, Karin, 82327 Tutzing (DE); SCHÜTZE, Raimund, 82327 Tutzing (DE); HERRMANN, Hendrik, 82347 Bernried (DE)
(74) Vertreter: Banzer, Hans-Jörg
(86) Internationale Anmeldenummer: PCT/EP2003/013013
(87) Internationale Veröffentlichungsnummer: WO 2004/045768

(56) Entgegenhaltungen:
- WO-A-01/60519
- WO-A-99/39176
- US-A- 5 592 289
- US-A- 5 998 129
- US-A1- 2002 056 345
- US-A1- 2002 155 617
- US-B1- 6 258 326

## Beschreibung

Die vorliegende Erfindung betrifft ein als Laser-Mikrodissektionssystem ausgestaltetes Mikroskopsystem, wobei der Halter zum Halten einer als Auffangvorrichtung von mit Hilfe des Laser-Mikrodissektionssystems aus einem biologischen Material dissektierten biologischen Objekten ausgestaltet ist.

Laser-Mikrodissektionssysteme werden zur Bearbeitung, Separierung und/oder Gewinnung von mikroskopisch kleinen biologischen Objekten eingesetzt. Ein derartiges herkömmliches Laser-Mikrodissektionssystem der Anmelderin ist beispielsweise in der WO 97/29355 A1 oder WO 01/73398 A1 beschrieben. Mit den in diesen Druckschriften offenbarten Laser-Mikrodissektionssystemen können einzelne biologische Objekte, welche auf einem planaren Objektträger angeordnet sind, rechnergestützt selektiert und mit einem Laserstrahl bearbeitet werden. Dabei kann ein selektiertes Objekt von dem umgebenden Material beispielsweise mit Hilfe des Laserstrahls zumindest teilweise abgetrennt werden, um anschließend das Objekt durch einen Laser-induzierten Transportprozess mit Hilfe eines Laserschusses, welcher auf das biologische Objekt gerichtet wird, von dem Objektträger zu einer Auffangvorrichtung zu katapultieren. Als Objektträger kann beispielsweise ein Glasobjektträger, auf den eine Polymermembran mit dem zu bearbeitenden biologischen Material gespannt ist, verwendet werden. Ebenso ist auch die Verwendung von Nur-Membran-Präparaten möglich. US : 5 998 129 offenbart auch ein Laser-Mikrosdissektionssystem, mit einem Mikroskop zum Beobachten eines biologischen Materials und einer Laservorrichtung zum Herauslösen eines biologisches objekts aus den biologischen Materials.

Das zuvor beschriebene Verfahren ermöglicht die Separierung, Sortierung und Gewinnung von biologischen Objekten, wobei im Rahmen der vorliegenden Patentanmeldung unter dem Begriff "biologische Objekte" vor allem lebende oder fixierte biologische Zellen oder Zellbestandteile verstanden werden, welche Bestandteil eines flüssigen oder festen biologischen Materials, wie beispielsweise eines Zellgewebes, eines Abstriches oder einer Zellkultur etc., sind. Mit Hilfe des zuvor beschriebenen Verfahrens können die jeweils selektierten biologischen Objekte gezielt mit einer ausgewählten Substanz durch berührungslose Laser-Mikroinjektion beladen und anschließend die erfolgreich injizierten biologischen Objekte aussortiert werden. Die biologischen Objekte können nebeneinander auf dem Objektträger aufgebracht sein, wobei der zuvor beschriebene Bearbeitungsvorgang innerhalb kurzer Zeit und berührungslos durchgeführt werden kann. Die Überlebensfähigkeit bzw. Morphologie der biologischen Objekte ist dabei gewährleistet, d.h. die biologischen Objekte werden durch den Mikroinjektionsvorgang und durch den Abtrenn- und Katapultierprozess nicht geschädigt bzw. beeinträchtigt.

Im Prinzip kann der zuvor erläuterte Laser-induzierte Transportprozess, d.h. das Herauskatapultieren einzelner, zuvor selektierter biologischer Objekte aus dem jeweils umgebenden biologischen Material, auch ohne vorhergehende Freipräparation des jeweils selektierten biologischen Objekts erfolgen, wenn die Laserenergie und/oder der Laserfokus im Moment des Setzens des separaten Laserschusses derart gewählt wird bzw. gewählt werden, dass die daraus resultierende Impulskraft dieses Laserschusses zum Herauslösen des entsprechenden biologischen Objekts aus der umgebenden Masse und für den Transportvorgang zu der Auffangvorrichtung ausreicht.

Da das zuvor beschriebene Verfahren manuell nur relativ aufwändig mit der gewünschten Präzision durchgeführt werden kann, sind die Laser-Mikrodissektionssysteme herkömmlicherweise rechnergestützt ausgestaltet, d.h. das Ausschneiden und/oder Katapultieren eines selektierten Objekts, das so genannte Dissektieren, erfolgt rechnergestützt, so dass die Laserlichtquelle, welche den zum Schneiden und/oder Katapultieren dienenden Laserstrahl erzeugt, automatisch angesteuert und die zum Schneiden und/oder Katapultieren erforderliche Relativbewegung zwischen dem Laserstrahl und dem das biologische Material aufweisenden Objektträger automatisch herbeigeführt und gesteuert wird. Insbesondere ist eine rechnergestützte Selektion bzw. Markierung der auf dem Objektträger befindlichen gewünschten biologischen Objekten möglich, so dass diese nachfolgend automatisch mit dem Laser-Mikrodissektionssystem bearbeitet werden können. Das Laser-Mikrodissektionssystem umfasst hierzu einen Bildschirm oder Monitor, auf dem ein von einer digitalen Kamera aufgenommenes Videobild des auf dem Objektträger befindlichen biologischen Materials dargestellt wird. Der Benutzer kann auf dem Bildschirm bzw. dem Videobild mit Hilfe entsprechender Graphiktools eine gewünschte Schnittkurve zeichnen, welche anschließend rechnergestützt automatisch mit dem Laserstrahl nachgefahren wird, um das somit selektierte biologische Objekt auszuschneiden. Auf ähnliche Art und Weise kann auf dem Bildschirm bzw. auf dem Videobild auch ein gewünschtes biologisches Objekt zum Herauskatapultieren markiert werden, wobei anschließend der separate Laserimpuls bzw. Laserschuss an der gewünschten Stelle auf dem biologischen Material ersetzt wird.

Obwohl bei den zuvor erläuterten bekannten Laser-Mikrodissektionssystemen bereits grundsätzlich eine rechnergestützte und automatisierte Verarbeitung des auf dem Objektträger befindlichen biologischen Materials möglich ist, besteht ein grundsätzliches Bedürfnis nach einem vollautomatisch durchführbaren Mikrodissektionsprozess. Dies betrifft jedoch nicht nur Laser-Mikrodissektionssysteme, sondern allgemein Mikroskopsysteme, bei denen eine Untersuchung bzw. Bearbeitung von biologischen Objekten möglichst automatisiert durchgeführt werden soll.

Der vorliegenden Erfindung liegt daher die Aufgabe zugrunde, eine Möglichkeit bereitzustellen, welche eine automatische Bearbeitung bzw. Untersuchung von biologischen Objekten mit Hilfe eines Mikroskopsystems, insbesondere eines Laser-Mikrodissektionssystems, verbessert und eine vollautomatische Beobachtung bzw. Bearbeitung von biologischen Objekten mit Hilfe derartiger Mikroskopsysteme ermöglicht.

Diese Aufgabe wird erfindungsgemäß durch ein Laser-Mikrodissektionssystem mit den Merkmalen des Anspruches 1 gelöst. Die Unteransprüche definieren jeweils bevorzugte und vorteilhafte Ausführungsformen der vorliegenden Erfindung.

Erfindungsgemäß wird ein Laser-Mikrodissektionssystem mit einem Halter für eine Aufnahmevorrichtung, welche zum Aufnehmen eines oder mehrerer biologischer Objekte vorgesehen ist, vorgeschlagen, wobei der Halter derart ausgestaltet ist, dass er bei einem Einsatz in einem Mikroskopsystem die Aufnahmevorrichtung in dem Mikroskopsystem auf geeignete Art und Weise zur Beobachtung bzw. Bearbeitung mit Hilfe des Mikroskopsystems hält. Dabei weist der Halter eine Codierung auf, mit deren Hilfe der Halter bzw. die davon gehaltene Aufnahmevorrichtung eindeutig identifiziert werden kann. Insbesondere kann die Codierung derart sein, dass mit Hilfe der Codierung unterschiedliche Typen von Aufnahmevorrichtungen bzw. Haltern unterschieden werden können.

Die Codierung kann dabei sowohl optisch als auch induktiv oder kapazitiv abtastbar ausgestaltet sein. Bei der von dem Halter gehaltenen Aufnahmevorrichtung kann es sich im Prinzip um eine Aufnahmevorrichtung beliebiger Art mit einem oder mehreren Aufnahmebehältern zum Aufnehmen von biologischen Objekten handeln. Insbesondere kann die Aufnahmevorrichtung Kappen von Eppendorf-Behältern, Röhrchen ("Tubes") von Eppendorf-Behältern, Streifen oder matrixartige Anordnungen ("Arrays") derartiger Kappen oder Röhrchen, ciphergene Chips, Wafer oder Mikrotiterplatten etc. umfassen.

Das erfindungsgemäß vorgeschlagene Mikroskopsystem umfasst Identifizierungsmittel zur Identifizierung einer von einem erfindungsgemäßen Halter gehaltenen Aufnahmevorrichtung durch Auswertung der entsprechenden Codierung und Steuermittel zur automatischen aufnahmevorrichtungsspezifischen Einstellung mindestens einer Funktion des Mikroskopsystems in Abhängigkeit von der identifizierten Aufnahmevorrichtung. Bei dieser aufnahmevorrichtungsspezifischen Funktion des Mikroskopsystems kann es sich beispielsweise um die automatische Darstellung einer schematischen Abbildung der identifizierten Aufnahmevorrichtung auf eine Wiedergabeeinrichtung des Mikroskops handeln, so dass ein Benutzer anschließend spezifisch für die identifizierte Aufnahmevorrichtung einzelne Aufnahmebehälter für eine Beobachtung oder Bearbeitung mit dem Mikroskopsystem auswählen und anschließend selektiv anfahren kann.

Bei dem erfindungsgemäßen Mikroskopsystem handelt es sich vorzugsweise um ein Laser-Mikrodissektionssystem, wobei mit Hilfe eines Laserstrahls selektiv biologische Objekte eines auf einem Objektträger angeordneten biologischen Materials dissektiert und in die Aufnahmevorrichtung befördert werden. Wie zuvor beschrieben worden ist, kann dies insbesondere durch Setzen einzelner Laserschüsse auf die zu dissektierenden biologischen Objekte geschehen, um die selektierten biologischen Objekte in gewünschte Aufnahmebehälter der identifizierten Aufnahmevorrichtung zu katapultieren. Nachdem das Laser-Mikrodissektionssystem den verwendeten Halter bzw. die davon gehaltene Aufnahmevorrichtung identifiziert hat, kann eine Abbildung der identifizierten Aufnahmevorrichtung auf einer Wiedergabeeinrichtung dargestellt werden, wobei ein Benutzer anschließend rechnergestützt festlegen kann, welche biologischen Objekte des auf dem Objektträger befindlichen biologischen Materials in welche Aufnahmebehälter der identifizierten Aufnahmevorrichtung befördert werden sollen. Dies kann beispielsweise mit Hilfe einer Bearbeitungsliste, welche von dem jeweiligen Benutzer rechnergestützt erstellt wird, erfolgen, wie sie in der DE 101 52 404 A1 der Anmelderin beschrieben und offenbart ist, wobei auf diese Druckschrift diesbezüglich vollinhaltlich verwiesen wird.

Vorzugsweise ist das Laser-Mikrodissektionssystem auch derart ausgestaltet, das nach einem Dissektionsvorgang mit Hilfe der in dem Laser-Mikrodissektionssystem ohnehin vorgesehenen Bildaufnahmemittel über die identifizierte Aufnahmevorrichtung gefahren wird, um ein oder mehrere Übersichtsbilder der Aufnahmevorrichtung mit den darin befindlichen Dissektaten zu erzeugen, welche anschließend auf der Wiedergabeeinrichtung dargestellt werden können, so dass durch Auswertung der dargestellten Übersichtsbilder die Qualität der Dissektion beurteilt werden kann. Hierzu ist auch hilfreich, wenn das Laser-Mikrodissektionssystem automatisch abhängig von der identifizierten Aufnahmevorrichtung ein Dissektionsprotokoll erstellt.

Aufgrund der erfindungsgemäß realisierten automatischen Erkennung von verwendeten Haltern bzw. Aufnahmevorrichtungen können vollautomatische Mikrodissektionsprozesse realisiert werden. Die Softwareparameter der entsprechenden Laser-Mikrodissektionssysteme lassen sich einfach zur Einbindung weiterer Halter bzw. Aufnahmevorrichtungen anpassen. Bedienungsfehler können vermieden und der Arbeitsablauf kann beschleunigt werden. Darüber hinaus ist eine Standardisierung und gute Reproduzierbarkeit jedes Arbeitsablaufs gewährleistet.

Die Erfindung lässt sich besonders vorteilhaft mit der bereits zuvor beschriebenen listenartigen Zusammenfassung zu bearbeitender biologischer Objekte kombinieren, wobei bei Gruppierung der gewünschten Objekte, beispielsweise abhängig von ihrem Typ, ein vollautomatisches Bearbeiten und im Falle eines Laser-Mikrodissektionssystems Auffangen bzw. Sammeln der gewünschten Dissektate in den Aufnahmebehältern der identifizierten Aufnahmevorrichtung ohne aufwändiges Wechseln der Aufnahmevorrichtungen bzw. der darin enthaltenen Aufnahmebehälter erzielt werden kann. Das Mikroskopsystem erkennt automatisch die jeweils verwendete Auffangvorrichtung, beispielsweise eine Mikrotiterplatte, und reagiert mit einem entsprechenden automatisierten Funktionsablauf, welcher von einem entsprechenden Bildschirmaufbau über die Zuordnung selektierter biologischer Objekte zu einzelnen Aufnahmebehältern der identifizierten Aufnahmevorrichtung bis hin zu dem automatischen und rechnergestützten Anfahren der gewünschten Aufnahmebehälter der identifizierten Aufnahmevorrichtung führen kann.

Die vorliegende Erfindung wird nachfolgend näher unter Bezugnahme auf die beigefügte Zeichnung anhand bevorzugter Ausführungsbeispiele erläutert.
Fig. 1 zeigt den Aufbau eines Laser-Mikrodissektionssystems gemäß einem bevorzugten Ausführungsbeispiel der vorliegenden Erfindung,
Fig. 2A und Fig. 2B zeigen Halter gemäß einem Ausführungsbeispiel der vorliegenden Erfindung mit einer optisch abtastbaren Codierung in Form von kammartigen Vorsprüngen,
Fig. 3 zeigt einen Halter gemäß einem Ausführungsbeispiel der vorliegenden Erfindung mit einer optisch abtastbaren Codierung in Form eines Barcodes,
Fig. 4 zeigt einen Halter gemäß einem Ausführungsbeispiel der vorliegenden Erfindung mit einer Codierung in Form eines kapazitiven oder induktiven Transponders,
Fig. 5 zeigt schematisch eine Ansicht eines Arms einer Verstellvorrichtung eines erfindungsgemäßen Laser-Mikrodissektionssystems, wobei dieser Arm zur Kopplung mit einem erfindungsgemäßen Halter ausgestaltet ist, und
Fig. 6 zeigt einen vereinfacht dargestellten Bildschirmaufbau eines erfindungsgemäßen Laser-Mikrodissektionssystems.

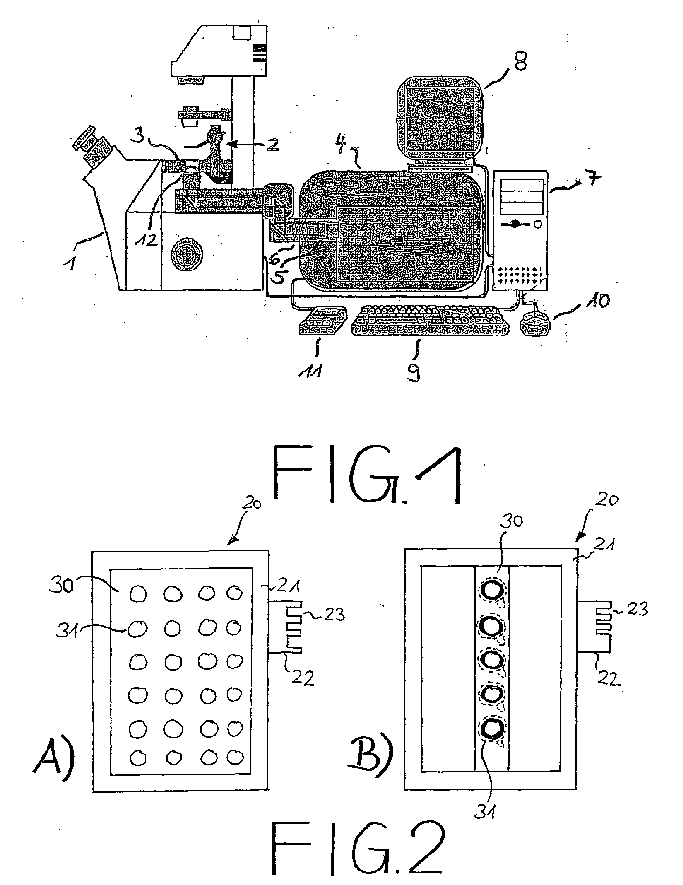

Das in Fig. 1 gezeigte Laser-Mikrodissektionssystem umfasst eine Laservorrichtung 4 mit einer Laserlichtquelle zur Erzeugung eines Laserstrahls. Des Weiteren ist in der Laservorrichtung 4 eine Optik 6 untergebracht, über welche der Laserstrahl in ein Mikroskop 1 eingekoppelt und der Laserfokus in der Objektebene auf den optischen Fokus des Mikroskops 1 abgestimmt werden kann. Bei der Laserlichtquelle kann es sich beispielsweise um einen gepulsten UV-Stickstofflaser handeln.

Zur präzisen Verstellung der Laserenergie ist ein Quarzfilter 5 senkrecht zum Laserstrahlpfad angeordnet, welcher zur Einstellung der Laserenergie manuell oder auch automatisch verstellt werden kann. Neben der Einstellung der Laserenergie kann auch der Laserfokus unabhängig von dem Mikroskopfokus eingestellt werden, d.h. der Brennpunkt des Laserstrahls kann in z-Richtung relativ zu der Objektebene des Mikroskops 1 verschoben werden, wobei zu diesem Zweck die in Fig. 1 gezeigten Linsen 6 manuell oder automatisch verstellt werden können.

Der Laserstrahl wird über mehrere beschichtete Strahlteiler in das Mikroskop 1 eingekoppelt und zu einem Objektiv 12 hin abgelenkt. Der Durchmesser des auf der Objektebene auftreffenden Laserstrahls ist maßgeblich von der numerischen Apertur des Objektivs 12 abhängig.

Der über das Objektiv 12 emittierte Laserstrahl trifft schließlich auf einen motorisierten und computergesteuerten Mikroskop- oder Trägertisch 3, auf dem ein Objektträger mit einem zu bearbeitenden biologischen Material angeordnet ist. Oberhalb des Trägertisches 3 befindet sich eine motorisierte und computergesteuerte Verstellvorrichtung 2, welche auch als Manipulator bezeichnet wird. Der Trägertisch 3 ist vorzugsweise in x- und y-Richtung verfahrbar, wobei grundsätzlich auch eine Verstellung in z-Richtung denkbar ist. An der Verstellvorrichtung 2 kann eine Nadel oder Mikropipette zur Mikroinjektion von biologischen Objekten angebracht sein. Im Rahmen der vorliegenden Erfindung wird jedoch davon ausgegangen, dass an der Verstellvorrichtung 2 eine Auffangvorrichtung angebracht ist, um von dem Objektträger wegkatapultierte biologische Objekte aufzufangen. Die motorisierte Verstellvorrichtung 2 kann sowohl in x/y-Richtung als auch in z-Richtung rechnergestützt verfahren werden.

Bei dem Mikroskop 1 kann es sich um ein beliebig ausgestaltetes Mikroskop handeln. Das in Fig. 1 dargestellte Laser-Mikrodissektionssystem besitzt einen inversen Aufbau, bei dem der Laserstrahl von unten auf den Objektträger trifft, um darauf befindliche biologische Objekte nach oben zu der Auffangvorrichtung, welche in Fig. 1 nicht dargestellt ist, zu katapultieren. Bei einem aufrechten Aufbau trifft hingegen der Laserstrahl von oben auf den Objektträger, so dass aus dem biologischen Material herausgelöste biologische Objekte nach unten auf die unterhalb des Objektträgers befindliche Auffangvorrichtung fallen.

Das Mikroskop 1 ist mit einer Videokamera, insbesondere einer CCD-Vidoekamera ("Charge Coupled Device") ausgestattet, welche insbesondere den Bereich des Objektträgers oberhalb des Objektivs 12 aufnimmt. Das Videosignal dieser Videokamera wird einem handelsüblichen Computer 7 zugeführt und dort verarbeitet, so dass das entsprechende Videobild in Echtzeit auf einem Bildschirm oder einem Monitor 8 des Computers 7 dargestellt werden kann. Ebenso ist ein Speichern einzelner Videobilder auf einem geeigneten Speichermedium des Computers 7 möglich. Des Weiteren kann mit dem Computer 7 auch ein analoger oder digitaler Videorekorder zum Aufzeichnen der von der Videokamera gelieferten Videobilder gekoppelt sein.

Wie nachfolgend näher beschrieben wird, sind auf dem Computer 7 bzw. durch die darauf ablaufende Software verschiedene Funktionen implementiert, die sowohl eine rechnergestützte, d.h. automatische, Ansteuerung der Laservorrichtung 4 als auch des Mikroskops 1 ermöglichen, so dass beispielsweise der Laser automatisch aktiviert und die Verstellvorrichtung 2 bzw. der Trägertisch 3 automatisch verfahren werden können. Ebenso ermöglichen diese rechnergestützten Funktionen eine besonders benutzerfreundliche Auswahl und Bearbeitung gewünschter biologische Objekte des auf dem Objektträger befindlichen biologischen Materials. Zur Einstellung bzw. Auswahl dieser Funktionen sind herkömmliche Eingabemittel, wie beispielsweise eine Tastatur 9 oder eine Computermaus 10, vorgesehen. Des Weiteren kann der Laservorrichtung 4 ein Fußschalter 11 zugeordnet sein, durch dessen Betätigung der Laser manuell aktiviert werden kann.

In Fig. 2A ist eine Aufnahmevorrichtung 30, bei dem dargestellten Beispiel in Form einer Mikrotiterplatte mit mehreren Vertiefungen, so genannten "Wells", gezeigt, welche zum Einsatz in dem in Fig. 1 dargestellten Laser-Mikrodissektionssystem vorgesehen ist. Die Aufnahmevorrichtung 30 ist dabei von einem umlaufenden Rahmen 21 eines Halters 20 gehalten, wobei von einer Seite des Rahmens 21 ein Ansatz 22 mit kammartigen Vorsprüngen 23 hervorsteht. Dieser Ansatz 22 dient einerseits zum Befestigen bzw. Anbringen des Halters 20 mit der Aufnahmevorrichtung 30 an der in Fig. 1 gezeigten Verstellvorrichtung 2. Andererseits dienen die kammartigen Vorsprünge 23 dieses Ansatzes 22 als Codierung, welche den Typ des Halters 20 bzw. der davon gehaltenen Aufnahmevorrichtung 30 identifiziert. Die Aufnahmevorrichtung 30 kann lediglich in den Rahmen 21 des Halters 20 eingelegt oder aber auch darin eingespannt sein. Die als Vertiefungen ausgebildeten Aufnahmebehälter 31 der Aufnahmevorrichtung 30 dienen zum Aufnehmen der mittels Laserbestrahlung aus dem auf dem Objektträger befindlichen biologischen Material herausgelösten Dissektate.

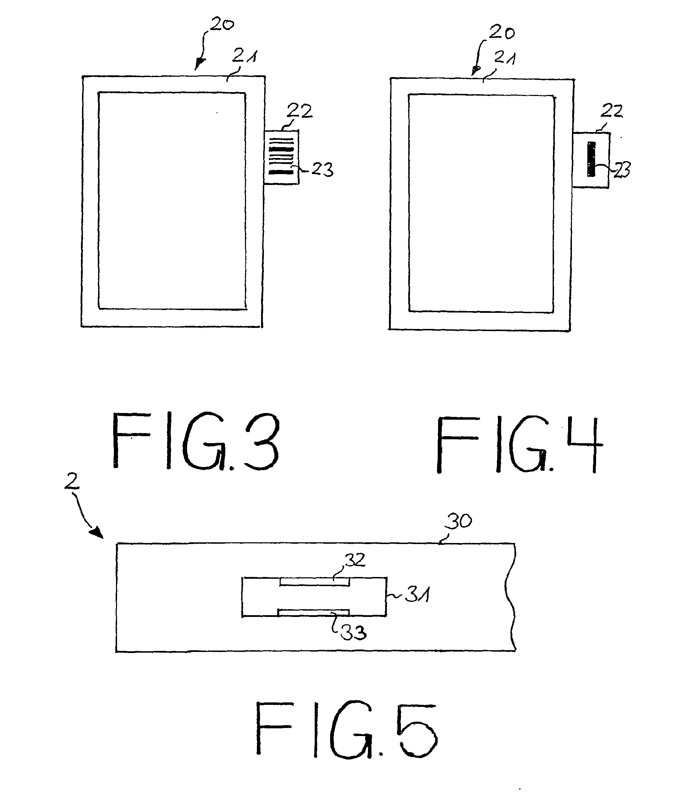

In Fig. 5 ist beispielhaft ein Arm 30 der in Fig. 1 gezeigten Verstellvorrichtung 2 dargestellt. Der Arm 30 weist eine Aufnahme 31 auf, in welche der Ansatz 22 des Halters 20 einzuführen ist. Im Bereich dieser Aufnahme 31 ist eine streifen- oder matrixartige Anordnung 32 mit Lichtquellen, beispielsweise Leuchtdioden, angeordnet, wobei gegenüberliegend zu dieser Anordnung 32 eine entsprechende Anordnung 33 mit Photodioden vorgesehen ist. Die Lichtquellen der Anordnung 32 emittieren Lichtstrahlen, welche von den Photodioden der Anordnung 33 empfangen und in elektrische Signale umgesetzt werden. Abhängig von der Anordnung der kammartigen Vorsprünge 23 des Ansatzes 22 des jeweils verwendeten Halters 20 werden einzelne dieser Lichtstrahlen entweder unterbrochen oder durchgelassen, so dass abhängig von den von den einzelnen Photodioden der Anordnung 33 erzeugten elektrischen Signale durch Vergleich des Signalmusters mit einem vorgegebenen, in dem Computer 7 abgespeicherten Signalmuster auf den Typ des Halters 20 bzw. der davon gehaltenen Aufnahmevorrichtung 30 geschlossen werden kann. Selbstverständlich sind auch andere Möglichkeiten zur optischen Abtastung der durch die kammartigen Vorsprünge 23 gebildeten Codierung möglich. So können beispielsweise Bilderfassungsmittel vorgesehen sein, welche ein Bild der kammartigen Vorsprünge aufnehmen, so dass der Computer 7 bzw. die darin implementierte Software automatisch auf den Typ des verwendeten Halters 20 bzw. der verwendeten Aufnahmevorrichtung 30 schließen kann.

In Fig. 2B ist als Beispiel für eine Aufnahmevorrichtung 30 ein Streifen mit mehreren darin eingesetzten Kappen von Eppendorf-Behältern als Aufnahmebehälter 31 dargestellt.

Auch in diesem Fall umfasst der am Rahmen 21 angebrachte Ansatz 22 als Codierung kammartige Vorsprünge, welche sich bezüglich ihrer Ausgestaltung und Anordnung ersichtlich von den in Fig. 2A dargestellten kammartigen Vorsprüngen unterscheiden, so dass durch Auswertung dieser kammartigen Vorsprünge eine eindeutige Unterscheidung zwischen den beiden Aufnahmevorrichtungen 30 möglich ist.

Fig. 3 zeigt ein weiteres Beispiel einer optisch abtastbaren Codierung, wobei auf den in dieser Figur dargestellten Ansatz 22 ein Barcode als Codierung 23 aufgebracht ist.

Selbstverständlich ist die vorliegende Erfindung nicht auf optisch abtastbare Codierungen beschränkt, sondern es kann im Prinzip jede beliebige Art von Codierung eingesetzt werden. Besonders vorteilhaft ist die Verwendung von induktiven oder kapazitiven Transpondern, welche wie in Fig. 4 gezeigt, als Codierung 23 in den Ansatz 22 integriert sein können, wobei diese Transponder beispielsweise bei Einsetzen in die in Fig. 5 gezeigte Aufnahme 31 ein darin erzeugtes elektromagnetisches Feld definiert verändern können, um aufgrund der sich daraufhin einstellenden Veränderung des elektromagnetischen Felds auf den Typ des verwendeten Halters 20 bzw. der verwendeten Aufnahmevorrichtung schließen zu können.

Im Prinzip kann die Codierung an jeder beliebigen Stelle des Halters 20 oder auch unmittelbar auf der Aufnahmevorrichtung 30 vorgesehen sein. Der Halter 20 und die Aufnahmevorrichtung können auch einteilig ausgestaltet sein. Ebenso ist denkbar, unterschiedliche Codierungsmöglichkeiten miteinander zu kombinieren, um eine absolute Erkennung eines jeden zur Verfügung stehenden Halters oder verschiedener Aufnahmevorrichtungen zu erzielen. Beispielhaft seien hierfür neben den gängigen Haltern für die Lasermikrodissektion auch Halter erwähnt, die verschiedene MALDI-Platten ("Matrix Assisted Laser Desorption Ionisation") oder unterschiedliche SELDI-Träger ("Surface Enhanced Laser Desorption/Ionisation"), die in sich codiert aber baugleich sind (interne Codierung durch geeignete Zweitmaßnahmen zur Erkennung), aufweisen.

Die grundsätzliche Bedienung des in Fig. 1 gezeigten Laser-Mikrodissektionssystems mit einem Halter bzw. einer Aufnahmevorrichtung der zuvor beschriebenen Art ist wie folgt.

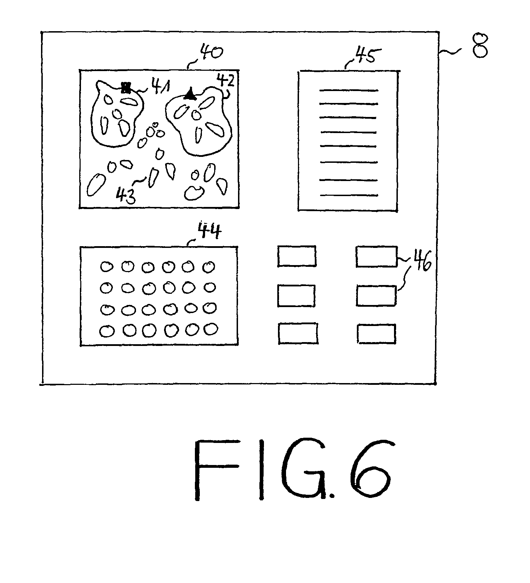

Nach Anbringen einer gewünschten Aufnahmevorrichtung 30 mittels des entsprechenden Halters 20 an der Verstellvorrichtung 2 des Laser-Mikrodissektionssystems wird der verwendete Halter 20 bzw. die verwendete Aufnahmevorrichtung 30 wie beschrieben automatisch identifiziert, und der Computer 7 reagiert auf die identifizierte Aufnahmevorrichtung mit einem entsprechenden Bildschirmaufbau, wie er beispielhaft in Fig. 6 dargestellt ist.

Wie aus Fig. 6 ersichtlich ist, wird von der Software des Computers 7 auf dem Bildschirm 8 in einem ersten Bildschirmbereich bzw. Fenster 40 das von der digitalen Videokamera des Mikroskops 1 aufgenommene Videobild des auf dem Objektträger befindlichen biologischen Materials, welches eine Vielzahl von biologischen Objekten 43 enthält, dargestellt. In einem zweiten Bildschirmabschnitt bzw. Fenster 44 wird eine schematische Abbildung der identifizierten Aufnahmevorrichtung dargestellt, wobei bei dem in Fig. 6 dargestellten Ausführungsbeispiel davon ausgegangen wird, dass es sich bei der identifizierten Aufnahmevorrichtung um eine Mikrotiterplatte mit einer in Fig. 6 dargestellten Anzahl von Vertiefungen als Aufnahmebehälter für die zu dissektierenden biologischen Objekte 43 handelt. In einem weiteren Bildschirmabschnitt bzw. Fenster 45 wird eine Liste der in der zuvor beschriebenen Druckschrift DE 101 52 404.8 A1 beschriebenen Art dargestellt, mit deren Hilfe ein Benutzer einzelne selektierte biologische Objekte 43 gewünschten Aufnahmebehältern der identifizierten Aufnahmevorrichtung zuordnen kann. In Fig. 6 sind darüber hinaus verschiedene Schaltflächen bzw. Softwarefunktionen 46 dargestellt, mit deren Hilfe ein Benutzer beispielsweise eine einmal erstellte Liste 45 speichern, löschen, exportieren oder einen Mikrodissektionsvorgang starten kann etc.

Der Benutzer des Laser-Mikrodissektionssystems kann nun in dem Bildschirmabschnitt 40 mit Hilfe von Graphiktools der Software des Laser-Mikrodissektionssystems einzelne zu bearbeitende biologische Objekte 43 markieren, wie dies in Fig. 6 beispielhaft anhand von Schnittlinien 41 und 42, welche um die gewünschten biologischen Objekte gezeichnet worden sind, dargestellt ist. Wie in der zuvor beschriebenen Druckschrift offenbart ist, kann für jedes zu bearbeitende biologische Objekt festgelegt werden, wie es bearbeitet werden soll, d.h. es kann beispielsweise unterschieden werden, ob es lediglich ausgeschnitten, ausgeschnitten und anschließend mit einem separaten Laserschuss katapultiert oder lediglich durch Setzen eines einzelnen Laserschusses unmittelbar katapultiert werden soll. Die Bearbeitungsart kann für jedes selektierte biologische Objekt in der Liste 45 festgehalten werden. Darüber hinaus können mit Hilfe der Liste 45 die ausgewählten biologischen Objekte gruppenweise zusammengefasst werden, wobei eine Zusammenfassung nach Objektgruppen bzw. Markierungen/Farben möglich ist. Das heißt sämtliche mit einer bestimmten Farbe oder einer bestimmten Markierung, beispielsweise einem in Fig. 6 gezeigten Quadrat oder einem in Fig. 6 gezeigten Dreieck, versehenen biologischen Objekte werden jeweils in einer Gruppe zusammengefasst. Die Gesamtzahl der in einer Gruppe zusammengefassten selektierten biologischen Objekte sowie deren Gesamtfläche wird vorzugsweise ebenfalls in der Liste 45 für jede Gruppe angegeben. Die Liste 45 kann wie beschrieben abgespeichert werden, wobei vorzugsweise für jedes in der Liste enthaltene und zuvor selektierte biologische Objekt auch die Position in Bezug auf eine zuvor gewählte Referenzposition des jeweiligen biologischen Materials gespeichert wird, um bei einer erneuten Verwendung eines Objektträgers mit dem bereits zuvor untersuchten biologischen Material sicherzustellen, dass die dort ausgewählten und markierten biologischen Objekte korrekt angefahren bzw. positioniert werden können.

Jedes einzelne Element bzw. biologische Objekt der Liste 45 kann vorzugsweise separat mit dem Laserstrahl mit Hilfe der Schaltflächen 46 bearbeitet werden. Darüber hinaus ist selbstverständlich auch möglich, dass die in der Liste 45 enthaltenen biologischen Objekte gruppenweise bearbeitet werden, d.h. die in einer Gruppe von dem Benutzer zusammengefassten biologischen Objekte werden anschließend durch automatische Ansteuerung der Laservorrichtung 4 sowie des Träger- bzw. Mikroskoptisches 3 automatisch angefahren, um sie in gewünschte Aufnahmebehälter 31 der von der Verstellvorrichtung 2 mit Hilfe des Halters 20 gehaltenen Aufnahmevorrichtung 30 zu befördern.

Das Zusammenfassen von selektierten biologischen Objekten in Gruppen ist insbesondere vorteilhaft, um biologische Objekte desselben Typs gruppenweise bearbeiten und gegebenenfalls in einem gemeinsamen Aufnahmebehälter oder in eine gemeinsame Gruppe von Aufnahmebehältern zu katapultieren. Sollen beispielsweise Tumorzellen in einem Aufnahmebehälter und gesunde Zellen in einem weiteren Aufnahmebehälter platziert werden, empfiehlt es sich, auf dem Bildschirmabschnitt 40 die gewünschten Zellen bzw. biologischen Objekte derart zu markieren, dass die Schnittlinien der Tumorzellen in einer ersten Farbe bzw. mit einer erste Markierung und die Schnittlinien der gesunden Zellen mit einer zweiten Farbe bzw. mit einer zweiten Markierung gezeichnet werden. In der Liste 45 würden dann die Tumorzellen und die gesunden Zellen jeweils in getrennten Gruppen zusammengefasst erscheinen, so dass durch gruppenweise Bearbeitung anschließend sämtliche Tumorzellen mit dem Laserstrahl bearbeitet und - abhängig von der jeweils eingestellten Laserfunktion - in gewünschte Aufnahmebehälter katapultiert werden können. Anschließend können dann die gesunden Zellen in separate Aufnahmebehälter gesammelt werden.

Die Darstellung der von der Software des Laser-Mikrodissektionssystems identifizierten Aufnahmevorrichtung in dem Bildschirmabschnitt 44 ist insbesondere vorteilhaft, um dem Benutzer eine korrekte Zuordnung der zu bearbeitenden biologischen Objekte 43 zu den einzelnen zur Verfügung stehenden Aufnahmebehältern der identifizierten Aufnahmevorrichtung 30 zu ermöglichen. Für jedes gemäß der in dem Bildschirmabschnitt 45 dargestellten Liste zu bearbeitende biologische Objekt legt der Benutzer mit Hilfe entsprechender Softwarefunktionen fest, in welche Aufnahmebehälter 31 der identifizierten Aufnahmevorrichtung 30 das gewünschte biologische Objekt transportiert werden soll. Selbstverständlich ist es auf diese Weise auch möglich, einzelnen selektierten biologischen Objekten wie beschrieben einem gemeinsamen Aufnahmebehälter zuzuordnen, um somit beispielsweise alle gesunden Zellen in einem ersten Aufnahmebehälter und alle Tumorzellen in einem zweiten Aufnahmebehälter zu sammeln etc. Die Zuordnung der selektierten biologischen Objekte zu den zur Verfügung stehenden Aufnahmebehältern kann beispielsweise einfach dadurch erfolgen, dass bei Erstellung der Liste 45 zu jedem selektierten biologischen Objekt der gewünschte Aufnahmebehälter 31 der identifizierten Aufnahmevorrichtung 30 mit der Computermaus 10 angeklickt und somit ausgewählt wird. Ebenso kann auf diese Weise eine Zuordnung von mehreren selektierten biologischen Objekten der Liste 45 zu einem gemeinsamen Aufnahmebehälter erfolgen.

Die automatische Identifizierung der verwendeten Aufnahmevorrichtung sowie die Darstellung einer entsprechenden schematischen Abbildung der identifizierten Aufnahmevorrichtung in dem Bildschirmabschnitt 44 gewährleistet, dass Bedienungsfehler vermieden werden, da der Benutzer automatisch über die verwendete Aufnahmevorrichtung informiert wird, wobei abhängig von der identifizierten Aufnahmevorrichtung nur die dieser identifizierten Aufnahmevorrichtung zugeordneten Aufnahmebehälter mit der korrekten Anordnung in dem Bildschirmabschnitt 44 dem Benutzer zur Mikrodissektion angeboten werden, so dass insgesamt der Arbeitsablauf beschleunigt werden kann.

Nachdem der Benutzer die Zuordnung der selektierten biologischen Objekte zu den gewünschten Aufnahmebehältern 31 der identifizierten Aufnahmevorrichtung 30 festgelegt hat, kann der Benutzer durch Betätigen einer entsprechenden Schaltfläche 46 ("Button") den automatischen Mikrodissektionsvorgang starten, wobei dann für die in der Liste 45 enthaltenen und zuvor selektierten biologischen Objekte durch entsprechende Ansteuerung der Laservorrichtung 4 sowie des Trägertisches 3 die jeweils gewünschte Bearbeitung durchgeführt wird. Nachdem in der Liste 45 zu jedem selektierten biologischen Objekt auch der gewünschte Aufnahmebehälter 31 der identifizierten Aufnahmevorrichtung 30 festgelegt ist, wird gleichzeitig für jedes zu bearbeitenden biologische Objekt von der Software des Laser-Mikrodissektionssystems die Verstellvorrichtung 2, an welcher sich der Halter 20 mit der entsprechenden Aufnahmevorrichtung 30 befindet, derart angesteuert, dass jeweils der dem zu bearbeitenden biologischen Objekt zugeordnete Aufnahmebehälter über den Laserstrahl automatisch bewegt wird, um das gewünschte biologische Objekt in den gewünschten Aufnahmebehälter befördern zu können. Dieser Ablauf erfolgt vollautomatisch, so dass ohne weiteres Zutun des Benutzers sämtliche in der Liste 45 zusammengefassten biologischen Objekte in den zugehörigen Aufnahmebehältern landen.

Wurde ein derartiger Mikrodissektionsvorgang durchgeführt, fährt die Software des Laser-Mikrodissektionssystems die bearbeiteten Aufnahmebehälter 30 mit der in dem Mikroskop 1 integrierten Videokamera oder mit Hilfe von anderen Bildaufnahmemitteln ab, um mit Hilfe einer Navigatorfunktion Übersichtsbilder der Aufnahmebehälter 31 zu erzeugen und auf dem Bildschirm 8 des Laser-Mikrodissektionssystems darzustellen. Der Benutzer hat somit die Möglichkeit, durch Auswertung dieser Übersichtsbilder die Qualität des durchgeführten Dissektionsvorgangs zu beurteilen.

Ebenso wird automatisch von der Software des Laser-Mikrodissektionssystems anschließend ein Dissektionsübersichtsprotokoll erstellt, welches detailliert Auskunft über die Daten des Dissektionsvorgangs gibt und beispielsweise statistische Daten sowie die Informationen der Liste 45 mit den Zuordnungen der Dissektate zu den einzelnen Aufnahmebehältern und den in den einzelnen Aufnahmebehältern enthaltenen Konstellationen der Dissektate etc. enthält. Dieses Dissektionsübersichtsprotokoll wird insbesondere wiederum abhängig von dem Typ der identifizierten Aufnahmevorrichtung erstellt.

Grundsätzlich kann der Benutzer zwischen einer manuellen und einer automatischen Bedienung entscheiden, wobei sich abhängig von der identifizierten Aufnahmevorrichtung Unterschiede ergeben können.

Bei einer manuellen Bedienung steuert der Benutzer die einzelnen gewünschten biologischen Objekte oder die entsprechenden Aufnahmebehälter direkt an, wobei bei einem gerasterten Anfahren durch Ansteuerung des Trägertisches 3 bzw. der Verstellvorrichtung 2 gegebenenfalls manuell oder automatisch nachjustiert werden kann. Bei einer freien manuellen Anfahrt ist es auch möglich, einzelne Aufnahmebehälter 31 der verwendeten Aufnahmevorrichtung 30 manuell derart feinzusteuern, dass der Benutzer in den entsprechenden Aufnahmebehälter sehen und diese beispielsweise zum Wiederauffinden von katapultierten Dissektaten fein bewegen kann.

Die Verwendung der zuvor beschriebenen Liste 45 in Kombination mit der automatischen Identifizierung der verwendeten Aufnahmevorrichtung ermöglicht beispielsweise besonders vorteilhaft die vollautomatische Durchführung von Konzentrationsreihen, welche z.B. im klinischen Einsatz einer Kalibrierung nachfolgender Untersuchungen dient. So kann beispielsweise in verschieden Aufnahmebehälter (in Fig. 6 beispielsweise in die Aufnahmebehälter der linken Spalte der identifizierten Aufnahmevorrichtung) beginnend mit einem biologischen Objekt hin bis zu einer festgelegten Menge von biologischen Objekten eine festgelegte Steigerung durchgeführt werden, um in die einzelnen zugeordneten Aufnahmebehälter unterschiedliche Konzentrationen von Dissektaten zu sammeln.

Der Vollständigkeit halber sei auch darauf hingewiesen, dass die zuvor beschriebene Navigatorfunktion, mit deren Hilfe nach einem Dissektionsvorgang die verwendeten Aufnahmebehälter 31 "gescannt" werden, sowohl für lediglich einen verwendeten Aufnahmebehälter als auch für eine Gruppe oder ein Areal von verwendeten Aufnahmebehältern durchgeführt werden kann, wobei die mit Hilfe dieser Navigatorfunktion aufgenommenen Übersichtsbilder vorzugsweise mit einem hochvergrößernden Objektiv, beispielsweise 100-fach oder 63-fach, durch Aneinanderreihen der einzelnen Übersichtsbilder auf dem Bildschirm 8 des Laser-Mikrodissektionssystems dargestellt werden. Die Übersichtsbilder können zusammen mit dem Dissektionsübersichtsprotokoll, in dem die selektierten biologischen Objekte zusammen mit den gewünschten Aufnahmebehältern verzeichnet sind, zu Qualitätssicherungs- und Dokumentationszwecken abgespeichert werden. Besonders vorteilhaft ist es, wenn alle benutzten Aufnahmebehälter 31, d.h. alle Aufnahmebehälter, in welche Dissektate befördert wurden, mit Hilfe der zuvor beschrieben Navigatorfunktion nach einem Dissektionsvorgang automatisch "gescannt" werden.

## Patentansprüche

1. Laser-Mikrodissektionssystem,
mit einem Mikroskop (1) zum Beobachten eines auf einem Objektträger (3) befindlichen biologischen Materials (43),
mit einer Laservorrichtung (4) zum Herauslösen eines biologischen Objekts aus dem biologischen Material (43) mittels Laserbestrahlung, und
mit mindestens einem Halter (20), welcher zum Einsatz in dem Laser-Mikrodissektionssystem derart ausgestaltet ist, um eine zum Aufnehmen des aus dem biologischen Material herausgelösten biologischen Objekts vorgesehene Aufnahmevorrichtung (30) für den Betrieb mit dem Laser-Mikrodissektionssystem zu halten,
**dadurch gekennzeichnet,**
**dass** der mindestens eine Halter (20) eine Codierung (23) aufweist, welche den Typ der Aufnahmevorrichtung (30) identifiziert,
**dass** Identifizierungsmittel (32, 33) zum Identifizieren der von dem Halter (20) jeweils gehaltenen Aufnahmevorrichtung (30) durch Auswertung der Codierung (23) des Halters (20) vorgesehen sind, und
**dass** Steuermittel (7) vorgesehen und derart ausgestaltet sind, dass sie in Abhängigkeit von der jeweils identifizierten Aufnahmevorrichtung (30) aufnahmevorrichtungsspezifisch Auswahlfunktionen zur Zuordnung von einzelnen aus dem biologischen Material herauszulösenden biologischen Objekten zu einzelnen Aufnahmebehältern (31) der jeweils identifizierten Aufnahmevorrichtung (30) bereitstellen.

2. Laser-Mikrodissektionssystem nach Anspruch 1,
**dadurch gekennzeichnet,**
**dass** die Identifizierungsmittel (32, 33) zur optischen Abtastung der Codierung (23) des Halters (20) ausgestaltet sind.

3. Laser-Mikrodissektionssystem nach Anspruch 1 oder Anspruch 2,
**dadurch gekennzeichnet,**
**dass** die Identifizierungsmittel (32, 33) zur induktiven Abtastung der Codierung (23) des Halters (20) ausgestaltet sind.

4. Laser-Mikrodissektionssystem nach einem der Ansprüche 1-3,
**dadurch gekennzeichnet,**
**dass** die Identifizierungsmittel (32, 33) zur kapazitiven Abtastung der Codierung (23) des Halters (20) ausgestaltet sind.

5. Laser-Mikrodissektionssystem nach einem der Ansprüche 1-4,
**dadurch gekennzeichnet,**
**dass** die Steuermittel (7) derart ausgestaltet sind, dass sie in Abhängigkeit von der identifizierten Aufnahmevorrichtung (30) eine Abbildung der identifizierten Aufnahmevorrichtung (30) auf einer Wiedergabeeinrichtung (3) darstellen.

6. Laser-Mikrodissektionssystem nach einem der Ansprüche 1-5,
**dadurch gekennzeichnet,**
**dass** die Steuermittel (7) derart ausgestaltet sind, dass sie in Abhängigkeit der identifizierten Aufnahmevorrichtung (30) aufnahmevorrichtungsspezifische Auswahlfunktionen zur.automatischen Ansteuerung der Aufnahmevorrichtung (30) anbieten.

7. Laser-Mikrodissektionssystem nach einem der Ansprüche 1-6,
**dadurch gekennzeichnet,**
**dass** die Steuermittel (7) derart ausgestaltet sind, dass sie in Abhängigkeit von der identifizierten Aufnahmevorrichtung (30) aufnahmevorrichtungsspezifisch eine Verstellvorrichtung (2) des Mikroskopsystems, mit welcher der Halter (20) zu koppeln ist, ansteuern, um die Aufnahmevorrichtung (30) in dem Mikroskopsystem mit Hilfe der Verstellvorrichtung (2) zu positionieren.

8. Laser-Mikrodissektionssystem nach einem der Ansprüche 1-7,
**dadurch gekennzeichnet,**
**dass** Bildaufnahmemittel zum Aufnehmen eines Bildes der Aufnahmevorrichtung (30) vorgesehen sind, und dass die Steuermittel (7) derart ausgestaltet sind, dass sie in Abhängigkeit von der identifizierten Aufnahmevorrichtung (30) die Bildaufnahmemittel aufnahmevorrichtungsspezifisch derart ansteuern, dass diese automatisch die Aufnahmevorrichtung (30) abfahren, um ein Bild der Aufnahmevorrichtung (30) aufzunehmen.

9. Laser-Mikrodissektionssystem nach Anspruch 8,
**dadurch gekennzeichnet,**
**dass** die Steuermittel (7) derart ausgestaltet sind, dass sie nach einem Dissektionsvorgang automatisch die Bildaufnahmemittel zum Aufnehmen des Bilds der Aufnahmevorrichtung (30) zumindest in einem Bereich derjenigen Aufnahmebehälter (31), in die die biologischen Objekte dissektiert werden, ansteuern.

10. Laser-Mikrodissektionssystem nach einem der Ansprüche 1-9,
**dadurch gekennzeichnet,**
**dass** die Steuermittel (7) derart ausgestaltet sind, dass sie in Abhängigkeit von der identifizierten Aufnahmevorrichtung (30) ein aufnahmevorrichtungsspezifisches Dissektionsprotokoll über einen in Bezug auf die Aufnahmevorrichtung (30) durchgeführten Dissektionsablauf erstellen.

11. Laser-Mikrodissektionssystem nach einem der Ansprüche 1-10,
**dadurch gekennzeichnet,**
**dass** der Halter (20) einen Rahmen (21) zum Halten der Aufnahmevorrichtung (30) aufweist.

12. Laser-Mikrodissektionssystem nach einem der Ansprüche 1-11,
**dadurch gekennzeichnet,**
**dass** die Codierung (23) eine optisch abtastbare Codierung ist.

13. Laser-Mikrodissektionssystem nach Anspruch 12,
**dadurch gekennzeichnet,**
**dass** die Codierung (23) kammartige Vorsprünge, welche sich von dem Halter (20) erstrecken, umfasst, wobei durch die Anordnung der Vorsprünge die Aufnahmevorrichtung (30) identifiziert ist.

14. Laser-Mikrodissektionssystem nach Anspruch 12 oder Anspruch 13,
**dadurch gekennzeichnet,**
**dass** die Codierung (23) einen Barcode umfasst.

15. Laser-Mikrodissektionssystem nach einem der vorhergehenden Ansprüche,
**dadurch gekennzeichnet,**
**dass** die Codierung (23) eine induktive Codierung umfasst.

16. Laser-Mikrodissektionssystem nach einem der vorhergehenden Ansprüche,
**dadurch gekennzeichnet,**
**dass** die Codierung (23) eine kapazitive Codierung umfasst.

17. Laser-Mikrodissektionssystem nach Anspruch 15 oder Anspruch 16,
**dadurch gekennzeichnet,**
**dass** die Codierung (23) einen Transponder umfasst.

18. Laser-Mikrodissektionssystem nach einem der vorhergehenden Ansprüche,
**dadurch gekennzeichnet,**
**dass** der Halter (20) zum Halten einer Aufnahmevorrichtung (30), welche ausgewählt ist aus einer Gruppe umfassend eine Kappe, ein Röhrchen, eine Mikrotiterplatte und Anordnungen davon, ausgestaltet ist.

## Claims

1. Laser microdissection system with a microscope (1) for observing a biological material (43)located on an object carrier (3), with a laser device (4) for excising a biological object from the biological material (43) by means of laser radiation, and with at least one holder (20) that is designed for use in the laser microdissection system in such a way that it can hold a receptacle device (30) provided for receiving the biological object excised from the biological material, for operation with the laser microdissection system, **characterised in that** the at least one holder (20) has a coding (23) that identifies the type of receptacle device (30), that identification means (32, 33) are provided for identifying the receptacle device (30) held in each case by the holder (20) by evaluating the coding (23) of the holder (20), and that control means (7) are provided and are designed in such a way that, depending on the receptacle device (30) identified in each case, they provide selection functions specific to the receptacle device for the allocation of individual biological objects to be excised from the biological material to individual receptacle containers (31) of the receptacle device (30) identified in each case.

2. Laser microdissection system according to claim 1, **characterised in that** the identification means (32, 33) are designed for the optical scanning of the coding (23) of the holder (20).

3. Laser microdissection system according to claim 1 or claim 2, **characterised in that** the identification means (32, 33) are designed for the inductive scanning of the coding (23) of the holder (20).

4. Laser microdissection system according to one of claims 1 to 3, **characterised in that** the identification means (32, 33) are designed for the capacitative scanning of the coding (23) of the holder (20).

5. Laser microdissection system according to one of claims 1 to 4, **characterised in that** the control means (7) are designed in such a way that, depending on the identified receptacle device (30), they form an image of the identified receptacle device (30) on a reproduction device (3).

6. Laser microdissection system according to one of claims 1 to 5, **characterised in that** the control means (7) are designed in such a way that, depending on the identified receptacle device (30), they provide selection functions specific to the receptacle device for the automatic manipulation of the receptacle device (30).

7. Laser microdissection system according to one of claims 1 to 6, **characterised in that** the control means (7) are designed in such a way that, depending on the identified receptacle device (30), they manipulate in a manner specific to the receptacle device an adjustment device (2) of the microscope system to which the holder (20) is to be coupled, in order to position the receptacle device (30) in the microscope system with the aid of the adjustment device (2).

8. Laser microdissection system according to one of claims 1 to 7, **characterised in that** image recording means for recording an image of the receptacle device (30) are provided, and that the control means (7) are designed in such a way that, depending on the identified receptacle device (30), they manipulate the image recording means in a manner specific to the receptacle device in such a way that these automatically remove the receptacle device (30) in order to record an image of the receptacle device (30).

9. Laser microdissection system according to claim 8, **characterised in that** the control means (7) are designed in such a way that after a dissection procedure they automatically manipulate the image recording means in order to record the image of the receptacle device (30) at least in a region of those receptacle containers (31) in which the biological objects are dissected.

10. Laser microdissection system according to one of claims 1 to 9, **characterised in that** the control means (7) are designed in such a way that, depending on the identified receptacle device (30), they prepare in a manner specific to the receptacle device a dissection protocol for a dissection work sequence carried out with respect to the receptacle device (30).

11. Laser microdissection system according to one of claims 1 to 10, **characterised in that** the holder (20) comprises a frame (21) for holding the receptacle device (30).

12. Laser microdissection system according to one of claims 1 to 11, **characterised in that** the coding (23) is an optically scannable coding.

13. Laser microdissection system according to claim 12, **characterised in that** the coding (23) comprises comb-like projections that extend from the holder (20), whereby the receptacle device (30) is identified by the arrangement of the projections.

14. Laser microdissection system according to claim 12 or claim 13, **characterised in that** the coding (23) comprises a barcode.

15. Laser microdissection system according to one of the preceding claims, **characterised in that** the coding (23) comprises an inductive coding.

16. Laser microdissection system according to one of the preceding claims, **characterised in that** the coding (23) comprises a capacitative coding.

17. Laser microdissection system according to claim 15 or claim 16, **characterised in that** the coding (23) comprises a transponder.

18. Laser microdissection system according to one of the preceding claims, **characterised in that** the holder (20) is designed to hold a receptacle device (30) that is selected from a group comprising a cap, a tube, a microtitre plate and arrangements thereof.

## Revendications

1. Dispositif de microdissection laser
comportant un microscope (1) pour observer un matériau biologique (43) se trouvant sur un porte-objet (3),
comportant un dispositif laser (4) servant à extraire un objet biologique du matériau biologique (43) au moyen d'un rayonnement laser, et
comportant au moins un support (20) qui est conçu de manière à être utilisé dans le dispositif de microdissection laser, pour soutenir un dispositif de réception (30) prévu pour recevoir l'objet biologique extrait du matériau biologique fonctionnant avec le dispositif de microdissection laser,
**caractérisé**
**en ce que** ledit au moins un support (20) présente un codage (23) qui identifie le type de dispositif de réception (30),
**en ce que** des moyens d'identification (32, 33) sont prévus pour identifier le dispositif de réception (30) soutenu respectivement par le support (20) par l'évaluation du codage (23) du support (20), et
**en ce que** des moyens de commande (7) sont prévus et conçus de telle manière qu'ils mettent à disposition des fonctions de sélection spécifiques au dispositif de réception en fonction du dispositif de réception (30) identifié respectivement pour affecter différents objets biologiques à extraire du matériau biologique à différents réservoirs de réception (31) du dispositif de réception (30) identifié respectivement.

2. Dispositif de microdissection laser selon la revendication 1,
**caractérisé**
**en ce que** les moyens d'identification (32, 33) sont conçus de façon à balayer de manière optique le codage (23) du support (20).

3. Dispositif de microdissection laser selon la revendication 1 ou la revendication 2,
**caractérisé**
**en ce que** les moyens d'identification (32, 33) sont conçus de façon à balayer de manière inductive le codage (23) du support (20).

4. Dispositif de microdissection laser selon l'une quelconque des revendications 1 à 3,
**caractérisé**
**en ce que** les moyens d'identification (32, 33) sont conçus de façon à balayer de manière capacitive le codage (23) du support (20).

5. Dispositif de microdissection laser selon l'une quelconque des revendications 1 à 4,
**caractérisé**
**en ce que** les moyens de commande (7) sont conçus de telle manière qu'ils représentent une illustration du dispositif de réception (30) identifié sur un équipement vidéo (3) en fonction du dispositif de réception (30) identifié.

6. Dispositif de microdissection laser selon l'une quelconque des revendications 1 à 5,
**caractérisé**
**en ce que** les moyens de commande (7) sont conçus de telle manière qu'ils proposent, en fonction du dispositif de réception (30) identifié, des fonctions de sélection spécifiques au dispositif de réception pour commander de manière automatique le dispositif de réception (30).

7. Dispositif de microdissection laser selon l'une quelconque des revendications 1 à 6,
**caractérisé**
**en ce que** les moyens de commande (7) sont conçus de telle manière qu'ils commandent, en fonction du dispositif de réception (30) identifié, un dispositif de réglage (2) du microscope de manière spécifique au dispositif de réception, auquel le support est à coupler (20), pour positionner le dispositif de réception (30) dans le microscope à l'aide du dispositif de réglage (2).

8. Dispositif de microdissection laser selon l'une quelconque des revendications 1 à 7,
**caractérisé**
**en ce que** des moyens de prise de vue sont prévus pour prendre une photo du dispositif de réception (30) et en ce que les moyens de commande (7) sont conçus de telle manière qu'ils commandent, en fonction du dispositif de réception (30) identifié, les moyens de prise de vue de manière spécifique au dispositif de réception de sorte qu'ils parcourent automatiquement le dispositif de réception de façon à prendre une photo du dispositif de réception (30).

9. Dispositif de microdissection laser selon la revendication 8,
**caractérisé**
**en ce que** les moyens de commande (7) sont conçus de manière à ce qu'ils commandent les moyens de prise de vue automatiquement, après une opération de dissection, de prendre la photo du dispositif de réception (30) au moins dans le secteur des réservoirs de réception (31) dans lesquels les objets biologiques sont disséqués.

10. Dispositif de microdissection laser selon l'une quelconque des revendications 1 à 9,
**caractérisé**
**en ce que** les moyens de commande (7) sont conçus de telle manière qu'ils mettent en place, en fonction du dispositif de réception (30) identifié, un protocole de dissection spécifique au dispositif de réception via un déroulement de dissection effectué lié au dispositif de réception (30).

11. Dispositif de microdissection laser selon l'une quelconque des revendications 1 à 10,
**caractérisé**
**en ce que** le porte-échantillons (20) comprend un cadre (21) servant à tenir le dispositif de réception (30).

12. Dispositif de microdissection laser selon l'une quelconque des revendications 1 à 11
**caractérisé**
**en ce que** le codage (23) est un codage qui peut être balayé de manière optique.

13. Dispositif de microdissection laser selon la revendication 12,
**caractérisé**
**en ce que** le codage (23) comprend des saillies en forme de peigne qui s'étendent à partir du support (20), le dispositif de réception (30) étant identifié par la disposition des saillies.

14. Dispositif de microdissection laser selon la revendication 12 ou la revendication 13,
**caractérisé**
**en ce que** le codage (23) comprend un code barre.

15. Dispositif de microdissection laser selon l'une quelconque des revendications précédentes,
**caractérisé**
**en ce que** le codage (23) comprend un codage inductif.

16. Dispositif de microdissection laser selon l'une quelconque des revendications précédentes,
**caractérisé**
**en ce que** le codage (23) comprend un codage capacitif.

17. Dispositif de microdissection laser selon la revendication 15 ou la revendication 16,
**caractérisé**
**en ce que** le codage (23) comprend un transpondeur.

18. Dispositif de microdissection laser selon l'une quelconque des revendications précédentes,
**caractérisé**
**en ce que** le porte-échantillons (20) est conçu pour tenir un dispositif de réception (30), lequel est choisi parmi un groupe comprenant une coupelle, un tube capillaire, une plaque microtitre et des configurations de ceux-ci.
